Europäisches Patentamt

European Patent Office

Office européen des brevets

(19)

(11)  EP 0 364 225 B1

(12)  EUROPEAN PATENT SPECIFICATION

(45) Date of publication and mention
of the grant of the patent:
**27.03.1996  Bulletin 1996/13**

(51) Int Cl.6: **H04N 9/64**

(21) Application number: **89310372.1**

(22) Date of filing: **11.10.1989**

(54) **Color signal processing apparatus**

Farbsignal-Verarbeitungsgerät

Appareil pour le traitement d'un signal de couleur

(84) Designated Contracting States:
**DE FR GB NL**

(30) Priority: **12.10.1988 JP 256733/88**
**12.10.1988 JP 256734/88**

(43) Date of publication of application:
**18.04.1990  Bulletin 1990/16**

(73) Proprietor: **CANON KABUSHIKI KAISHA**
**Tokyo 146 (JP)**

(72) Inventors:
• **Fukatsu, Tsutomu**
**Yokohama-shi Kanagawa-ken (JP)**

• **Yoshimura, Katsuji**
**Kawasaki-shi Kanagawa-ken (JP)**

(74) Representative:
**Beresford, Keith Denis Lewis et al**
**BERESFORD & Co.**
**2-5 Warwick Court**
**High Holborn**
**London WC1R 5DJ (GB)**

(56) References cited:
**EP-A- 0 196 756      GB-A- 2 110 047**
**GB-A- 2 136 247      GB-A- 2 145 903**
**US-A- 4 745 463**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

This invention relates to a a color signal processing apparatus arranged to convert a carrier chrominance signal conforming to the PAL system into color-difference signals; to perform various color signal processing actions; and, after that, to modulate the signals back into the carrier chrominance signal.

In carrying out a digital processing operation such as a noise reduction process on a composite video signal using, for example, a field memory, etc., the video signal is preferably demodulated into baseband signals such as a luminance signal and color-difference signals for the digital processing action. In this instance, the demodulation of the composite video signal necessitates two different processes including (1) a process of separating the signal into a luminance signal (hereinafter referred to as a Y signal) and a carrier chrominance signal (hereinafter referred to as a C signal) and (2) a process of demodulating the C signal into color-difference signals. In the process (2), baseband color-difference signal components are obtained in a digital signal form by directly A/D (analog-to-digital) converting the C signal using two different sampling clock signals which are locked to the color burst signal of the C signal.

In the case of the color TV signal of the NTSC system, for example, an NTSC composite video signal is first separated into Y and C signals. After that, the C signal is A/D converted with a sampling clock signal of a frequency which is four times as high as the frequency of the color burst signal. During this A/D converting process, if the sampling clock signal is accurately phase-locked to the phase 0°, 90° 180° or 270° of the color burst signal, sample data obtained at 180° can be regarded as a color-difference B-Y signal and sample data obtained at 270° as another color-difference R-Y signal. The carrier chrominance signal is demodulated into two color-difference signals by sorting out these sample data by means of a subcarrier frequency fsc.

Further, in modulating the color-difference signal components into the C signal, data of 0° is obtained from the data of 180° phase and data of 90° from the data of 270° phase by inverting the polarity of the data. They are thus D/A converted one after another.

For example, with the 180° phase data which is obtained by A/D converting the C signal assumed to be expressed as D180, the 0° phase data D0 can be expressed as follows: D0 = - (D180 - Dce), wherein Dce represents the DC offset value of the C signal.

While the NTSC system color TV signal is processed in the above-stated manner, the digital process for the PAL system signal is performed as follows: In this case, the carrier wave of the color-difference R-Y signal is inverted for every scanning line. Therefore, the data to be sorted out must be changed from one data over to the other for every scanning line by monitoring the burst phase of the scanning lines. In the case of the PAL system, the B-Y signal carrier wave is fixed at 90°. The R-Y signal component is at 0° (the color burst phase at this time is 315° and at 180° (the color burst phase at that time is 225°). Demodulation is performed by sorting A/D converted data of them.

In the noise reduction process, etc. on the signal of the NTSC, the series of processes, i.e., demodulation, signal processing and modulation, can be carried out without any difficulty as long as the quadratic relation is maintained even if the demodulation axis is not absolutely determined as mentioned above. Therefore, the sampling clock signal to be used for the A/D conversion is only required to be in synchronism with a frequency which is four times as high as the frequency of the carrier wave. The phasic relation of the sampling clock signal is ignorable.

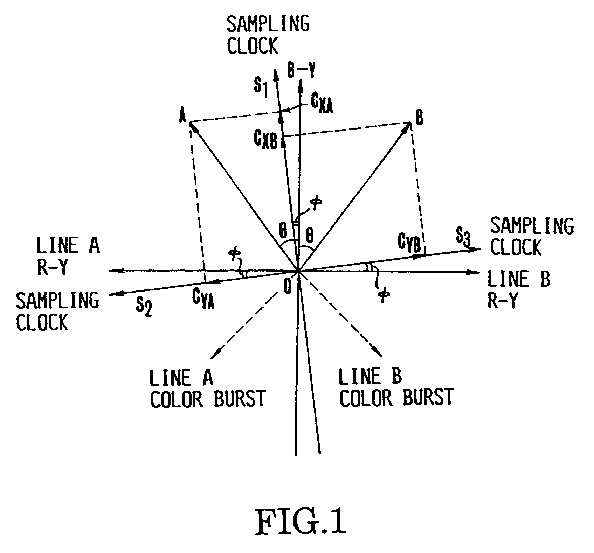

Whereas, the signal of the PAL system presents the following problem: Fig. 1 of the accompanying drawings is a vectorial representation of quadrature demodulation performed without phase-locking the demodulation axis to B-Y and R-Y axes. The carrier chrominance signal is shown as a vector OA by a line A and as a vector OB by a line B. The carrier chrominance signal is demodulated by A/D converting it with a sampling clock signal which deviates as much as a phase $\phi$ from the B-Y and R-Y axes. Then, the color components becomes as expressed below:

Line A ---    $C_{XA} = r \cos (\theta - \phi)$
$C_{YA} = r \sin (\theta - \phi)$
Line B ---    $C_{XB} = r \cos (\theta + \phi)$
$C_{YB} = r \sin (\theta + \phi)$

wherein r represents the absolute value of vectors OA and OB, ie., the amplitude of the carrier chrominance signal.

Since the color signal components thus vary with the scanning line, it is impossible to maintain an adequate hue when inter-field processing is performed.

In GB-A-2145903 there is described a sampled data signal processing apparatus for digital signal processing in a color television receiver. In this apparatus the composite color television signal is converted into a digital signal and then a digital chrominance signal is separated from the digital signal and a digital (R - Y) signal and digital (B - Y) signal are demodulated from the separated digital chrominance signal.

According to the present invention a color signal processing apparatus for processing a carrier chrominance signal conforming to the PAL system by converting the carrier chrominance signal into a base band signal, performing a predetermined processing on the base band signal and then converting the base band signal back into the carrier chrominance signal, characterised by:

(A) clock signal forming means for forming a clock signal which is phase-synchronized with a reference phase of the carrier chrominance signal and has a frequency four times as high as a carrier frequency;

(B) first conversion means for converting said carrier chrominance signal into a digital signal on the basis of the clock signal formed by said clock signal forming means and for outputting the digital signal;

(C) latching means for phase-synchronizing the digital signal outputted from said conversion means with the clock signal outputted from said clock signal forming means and for latching the digital signal at two different timing points, thereby extracting first and second digital signals;

(D) first delay means for delaying the first digital signal latched by said latching means and for outputting the delayed signal;

(E) first addition means for adding the first digital signal latched by said latching means and the first digital signal outputted from said first delay means and for outputting the added signal;

(F) second delay means for delaying the second digital signal latched by said latching means and for outputting the delayed signal;

(G) second addition means for adding the second digital signal latched by said latching means and the second digital signal outputted from said second delay means and for outputting the added signal;

(H) digital signal processing means arranged to input the first digital signal outputted from said first addition means and the second digital signal outputted from said second addition means, to perform digital signal processing on said first digital signal and second digital signal and to output the processed signal;

(I) second conversion means arranged to input said first digital signal and second digital signal outputted from said digital signal processing means, to convert said first digital signal and second digital signal into analog carrier chrominance signals on the basis of the clock signal formed by said clock signal forming means; and

(J) means for forming DC offset component signals corresponding to DC offset components of the first and second digital signals latched by said latching means and for subtracting said DC offset component signals from the first and second digital signals outputted from said signal processing means.

How the invention may be carried out will now be described by way of example only and with reference to the accompanying drawings in which:

Brief Description of the Drawings:

Fig. 1 is a vectorial representation showing the quadrature demodulation of a carrier chrominance signal.

Fig. 2 is a block diagram showing in outline the arrangement of a color signal processing apparatus arranged according to this invention as an embodiment thereof.

Figs. 3A, 3B and 4 are wave-form charts showing the operation of the embodiment shown in Fig. 2 through wave forms of signals output from the various parts of Fig. 2.

Fig. 5 is a block diagram showing in outline the arrangement of a color signal processing apparatus arranged as another embodiment of the invention. Fig. 6 shows the sampling points of color-difference signals of the PAL system as in relation to lines.

Detailed Description of the Preferred Embodiments:

An embodiment of this invention is arranged as described below with reference to the drawings, in which:

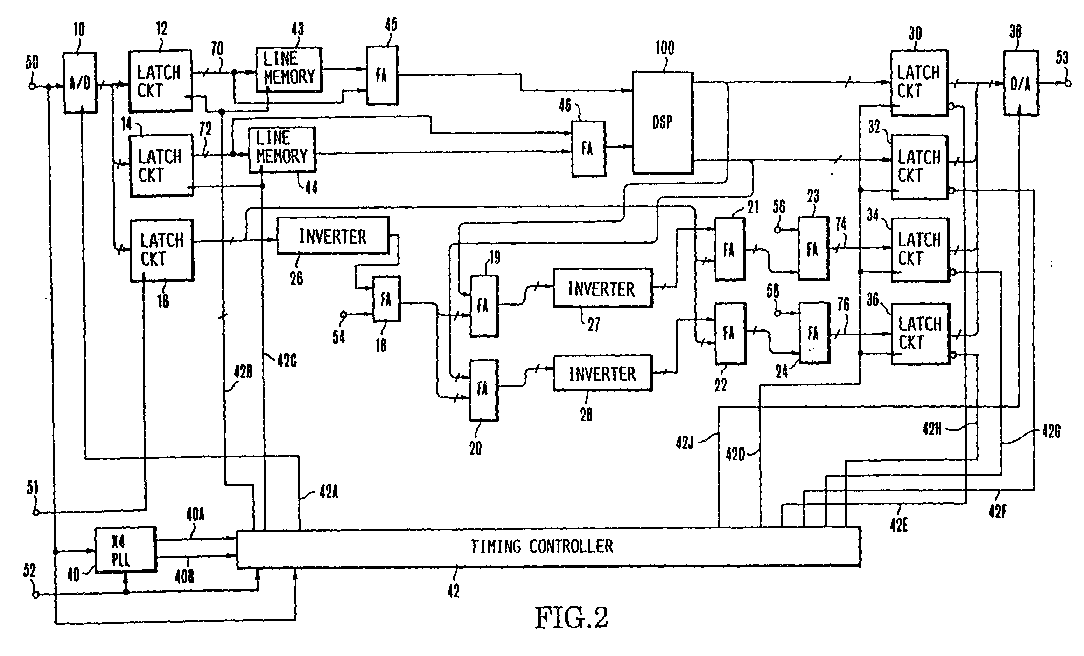

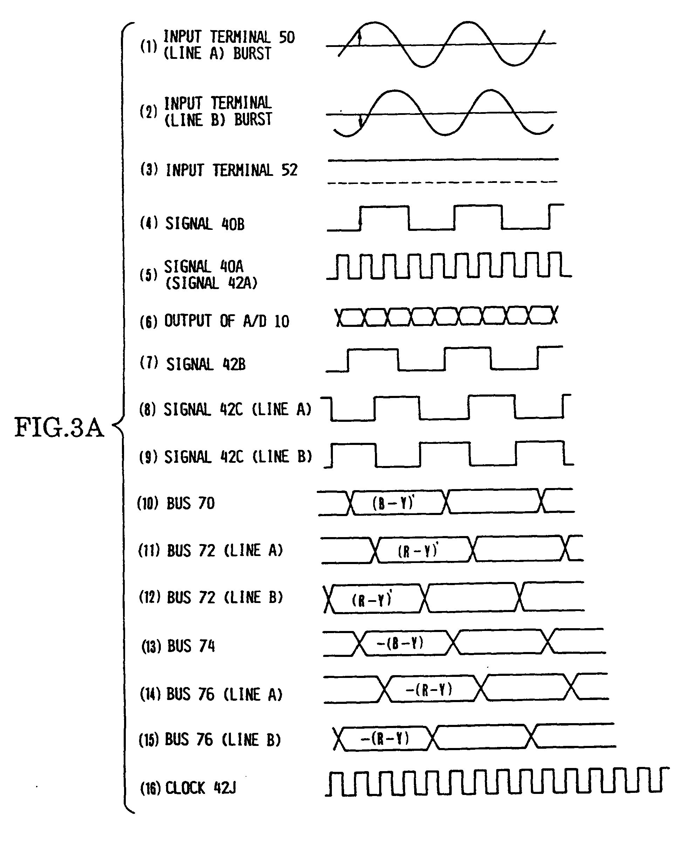

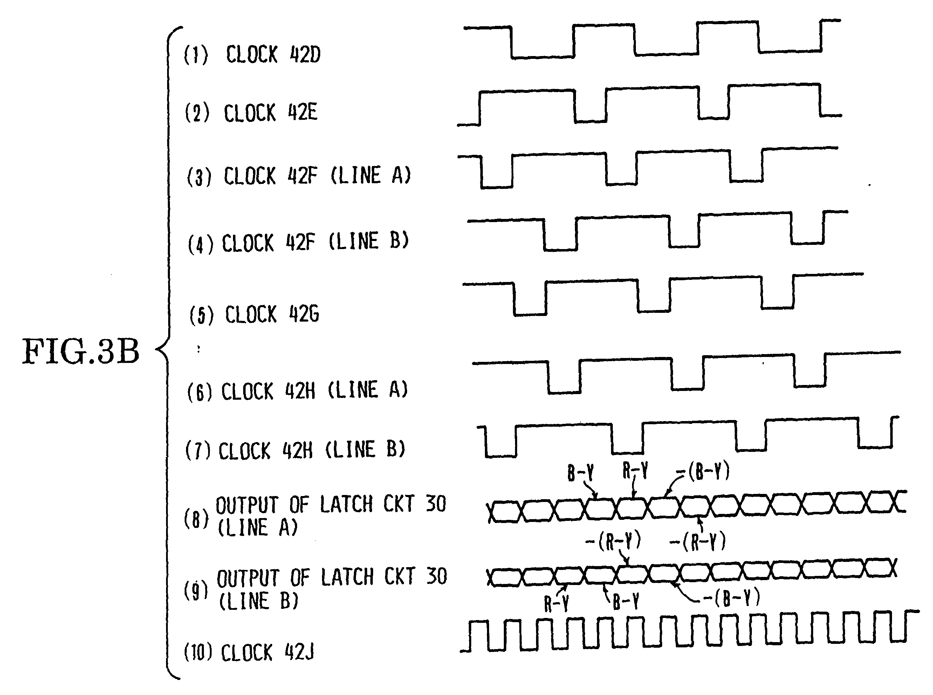

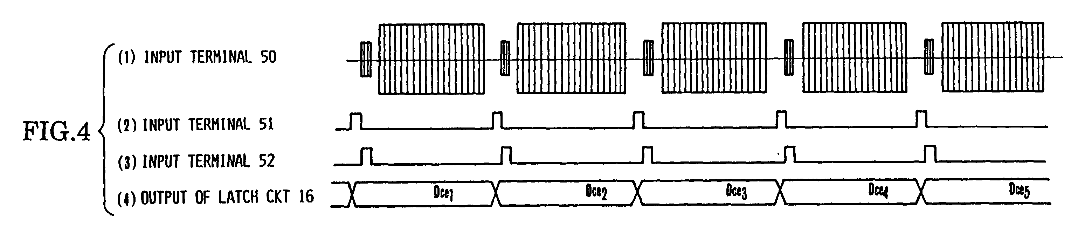

Fig. 2 shows in outline the arrangement of a color signal processing apparatus as an embodiment of the invention. Figs. 3A, 3B and 4 show the operation of the color signal processing apparatus through the wave forms of signals output from the various parts of the apparatus.

Referring to Fig. 2, the illustration includes an A/D (analog-to-digital) converter 10; latch circuits 12, 14 and 16; full adders 18, 19, 20, 21, 22, 23 and 24; inverters 26, 27 and 28; latch circuits (OC latch circuits) 30, 32, 34 and 36 which are provided with output control (output/high impedance change-over) devices; a D/A (digital-to-analog) converter 38; a PLL circuit 40; a timing controller 42; line memories 43 and 44 for 1 H; and full adders 45 and 46. The latch circuits 12 to 16 and 30 to 36, the inverters 26, 27 and 28 are provided in quantities corresponding to the number of output bits of the A/D converter 10. An input terminal 50 is arranged to input a C signal obtained by Y/C separating a composite video signal. An input terminal 51 is arranged to input a clock signal generated during a horizontal or vertical synchronizing period. An input terminal 52 is arranged to receive a timing signal indicating an interval for a color burst signal. An output terminal 53 is arranged to output the C signal. Input terminals 54, 56 and 58 are arranged to input a fixed value "01" (a hexadecimal value).

The output 40A of the PLL circuit 40 is a clock signal of a quadruple frequency locked to the color burst signal of the carrier chrominance signal. The output 40B of the PLL circuit 40 is a clock signal obtained by dividing by four the output 40A and is of a carrier period which is in a fixed phasic relation to the color burst signal of the carrier chrominance signal. The timing controller 42 is arranged to output a clock signal 42A for A/D conversion; clock signals 42B and 42C for C signal demodulation; timing signals 42D, 42E, 42F, 42G and 42H for data transfer; and a clock signal 42J for D/A conver-sion. These outputs of the timing controller 42 are phase-locked to the output 40B of the PLL circuit 40 i.e., to the color burst signal). Data buses 70 and 72 are provided for demodulated color-difference signals. Data buses 74 and 76 are provided for conveying data of opposite polarities generated by a modulation process.

The PLL circuit 40 extracts the color burst signal from the C signal obtained from the input terminal 50 in accordance with the timing signal obtained from the input terminal 52. The PLL circuit 40 then produces the clock signal 40B of the carrier period which is in synchronism with the average of the burst signal (180° phase with the B-Y carrier wave assumed to be 90° and also produces the clock signal 40A which is of a frequency four times as high as that of the clock signal 40B (4fsc: fsc represents a color subcarrier frequency). In accordance with this, the timing controller 42 applies the A/D conversion clock signal 42A (of frequency 4fsc) to the A/D converter 10. The C signal from the input terminal 50 is thus converted into digital data. The digital data is supplied to the latch circuits 12, 14 and 16. The timing controller 42 also generates clock signals 42B and 42C (frequency fsc) which is in a fixed phasic relation to the color burst signal. These clock signals 42B and 42C are respectively supplied to the control input terminals of the latch circuits 12 and 14. By this, the data output from the A/D converter 10 is separated into color-difference signal components and demodulated into artificial color-difference signals.

Then, the timing controller 42 detects the phase of the color burst signal of the carrier chrominance signal (C signal) obtained from the input terminal 50 and changes the polarity of the clock signal 42C from one polarity over to the other.

The artificial color-difference signal components (the outputs of the latch circuits 12 and 14) thus obtained would vary with line if the demodulation axis (A/D sampling phase) fails to coincide with the axes of the B-Y and R-Y components as mentioned in the foregoing. Therefore, the line memories 43 and 44 and the full adders 45 and 46 are arranged to perform inter-line adding operations on the artificial quadrature color-difference signal components. In other words, the signal of the line A and the signal of the ensuing line B are inter-line added. The sums thus obtained can be expressed as follows:

$$C_X = C_{XA} + C_{XB}$$

$$= r \left[ \cos(\theta - \phi) + \cos(\theta + \phi) \right]$$

$$= 2r \cos\phi \cdot \cos\theta$$

$$C_Y = C_{YA} + C_{YB}$$

$$= r \left[ \sin(\theta \ \phi) + \sin(\theta + \phi) \right]$$

$$= 2r \cos\phi \cdot \sin\theta$$

As a result, each of the color components is obtained in the form of having the B-Y or R-Y signal multiplied by a given scalar quantity $2 \cos \phi$. This makes the hue unvarying. The color-difference signals thus become perfect B-Y and R-Y signals including DC offsets therein. The two signals thus obtained are supplied to the digital signal processing circuit (DSP) 100. The circuit 100 then performs a predetermined signal processing action including image enlarging and composing processes, a noise reduction process, etc. by using a field memory. The signal processing action is performed in a known manner and therefore the detailed description of it is omitted from the description given herein. The color-difference signals of two kinds which have undergone these processes are output from the circuit 100.

The digital color-difference signals thus obtained through the digital signal processing circuit (DSP) 100 are modulated to obtain a carrier chrominance signal in the following manner:

The latch circuit 16 latches the output of the A/D converter 10 produced during the horizontal synchronizing (hereinafter referred to as sync for short) period in accordance with the timing signal received via the input terminal 51. The A/D converter 10 produces data which includes a DC offset. Assuming that the color signal component is expressed as $C_X$ and the DC offset as Dce, data $C_{DX}$ thus obtained is expressed as follows:

$$C_{DX} = C_X + Dce$$

Assuming that the data of the opposite polarity to be formed is $C_{PX}$, the data $C_{PX}$ can be expressed as:

$$C_{PX} = - C_X + Dce$$

$$= - (C_{DX} - Dce) + Dce$$

Therefore, with the full adder and the inverter used, this computation can be expressed as follows:

$$C_{PX} = Dce + \overline{\overline{C_{DX}} + \overline{\overline{Dce} + 1} + 1}$$

In the case of the embodiment described, the latch circuit 16 is caused by the timing signal from the input terminal 51 to hold the A/D converted data of the sync period during which there is no carrier chrominance signal. The value of the data thus held corresponds to the DC offset component Dce shown in the formulas given above. This data is inverted by the inverter 26 and "1" is added to it by the full adder 18. Since the data $C_{DX}$ is obtained from the digital signal processing circuit 100, the data $C_{DX}$ is obtained by means of the full adders 19 and 20. After that, the above-stated computing operation is carried out by means of the full adders 21 to 24 and the inverters 27 and 28.

Through the above-stated process, the desired data of the inverted polarity are obtained from the full adders 23 and 24. These data are then supplied to the inverted polarity data buses 74 and 76. The color-difference components output from the digital signal processing circuit 100 are latched together with the data of the inverted polarity data buses 74 and 76 by the latch circuits 30, 32, 34 and 36 in accordance with the clock signal 42D. The output sequence of the data, i.e., digital signals, from these latch circuits is controlled by the output control signals 42E, 42F, 42G and 42H in supplying them to the D/A converter 38. The D/A converter 38 converts these input digital signals into an analog signal in accordance with the clock signal 42J and outputs the analog signal therefrom. The output of the D/A converter 38 is a carrier chrominance which has undergone the predetermined signal processing action.

If the DC offset value Dce extracted does not coincide with the A/D converted data of the DC offset of the C signal in the apparatus of the kind arranged as described above, the discrepancy would cause a distortion in the modulated wave form. Whereas, in the case of this embodiment, the A/D converted data obtained during the horizontal sync period which is devoid of the carrier chrominance signal is used as the DC offset value Dce to be added. This ensures that the DC offset value extracted is very accurate. This effectively prevents any modulation distortion that results from the individual variations of the analog circuit element constants, variations of the power supply voltage, etc..

In the arrangement described, the DC offset of the color-difference signals supplied to the latch circuits 30 and 32 is processed by the digital signal processing circuit 100 at a timing different from a timing at which the DC offset value Dce output from the latch circuit 16. However, this timing discrepancy presents no problem as a period of time required for any variation in the DC offset is sufficiently longer than the processing period of time required by the digital signal processing circuit 100.

Further, for increased accuracy of the DC offset value Dce, the DC offset value may be sampled a plurality of times during one horizontal sync period and a value obtained by averaging these sampled values may be used as the value Dce in the above-stated computing process.

In the embodiment described, the inter-line addition is performed within one and the same field by means of the line memories 43 and 44. However, this may be changed to an inter-frame adding operation.

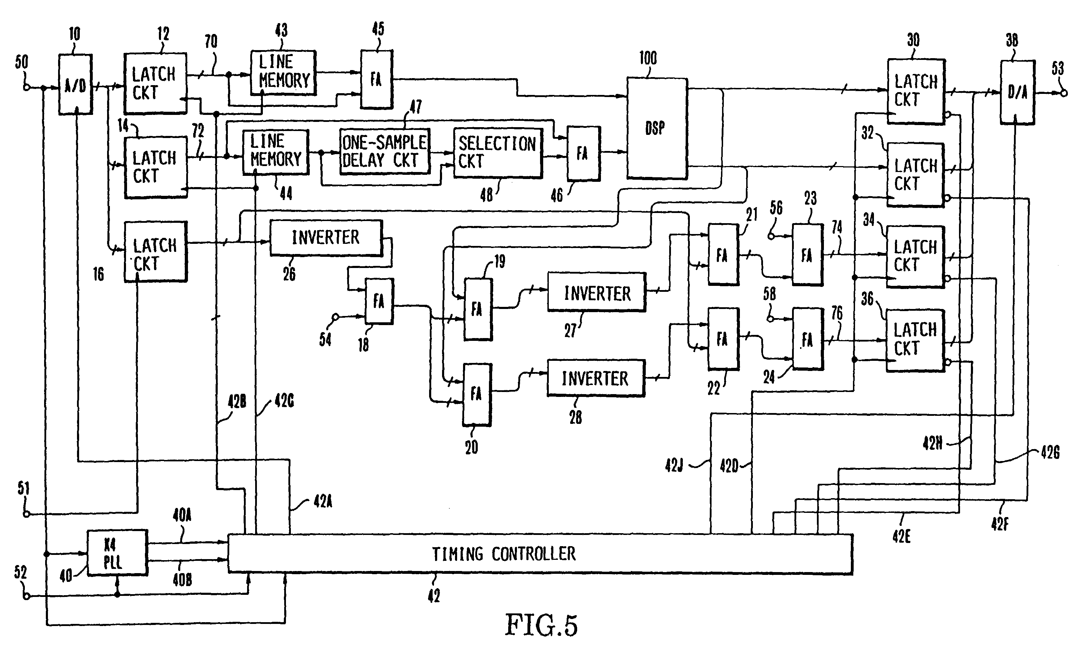

Fig. 5 is a block diagram showing the arrangement of another embodiment of the invention. In Fig. 5, the components which are arranged in the same manner as those shown in Fig. 2 are indicated by the same reference numerals and the details of them are omitted from the following description.

Referring to Fig. 5, the PLL circuit 40 is arranged to extract the color burst signal from the C signal from the input terminal 50 in accordance with the timing signal coming via the input terminal 52. The PLL circuit 40 then produces a clock signal 40B which is synchronized with the average of the color burst signal (180° phase with the phase of the B-Y carrier wave assumed to be at 90°) and another clock signal 40A which is of a frequency four times as high as that of the clock signal 40B (4fsc: fsc represents a color subcarrier frequency). The timing controller 42 is arranged to produce an A/D conversion clock signal 42A (of the frequency 4fsc) according to the clock signal 40A. The clock signal 42A is supplied to the A/D converter 10. By this, the C signal received at the input terminal 50 is converted into digital data. The digital data is then supplied to latch circuits 12, 14 and 16. The timing controller 42 further generates clock signals 42B and 42C (of frequency fsc) which are in a given phasic relation to the color burst signal. These clock signals 42B and 42C are supplied to the control terminals of the latch circuits 12 and 14 respectively. By this, the data output from the A/D converter 10 is separated and demodulated into color-difference components. Artificial color-difference signals are thus obtained. Then, the timing controller 42 detects the phase of the color burst signal of the carrier chrominance signal (or the C signal) obtained via the input terminal 50 and changes the polarity of the clock signal 42C from one polarity over to the other polarity.

The artificial color-difference components (the outputs of the latch circuits 12 and 14) which are thus obtained would vary with the line if the demodulation axis (the A/D conversion sampling phase) does not coincide with the axes of the B-Y and R-Y components as mentioned in the foregoing. To solve this problem, an inter-line adding operation is performed on each of the artificial color-difference components by means of line memories 43 and 44, a delay circuit 47 which is arranged to delay its input for a period of time corresponding to one sampling period of time (i.e., a D type flip-flop), a selection circuit 48 which is arranged to select either the output of the line memory 44 or that of the delay circuit 47 and full adders 45 and 46. In other words, an inter-line adding operation is performed on the signals of alternate lines A and B. The sums thus obtained can be expressed as follows:

$$C_X = C_{XA} + C_{XB}$$

$$= r \left[\cos(\theta - \phi) + \cos(\theta + \phi)\right]$$

$$= 2r \cos\phi \cdot \cos\theta$$

$$C_Y = C_{YA} + C_{YB}$$

$$= r \left[\sin(\theta - \phi) + \sin(\theta + \phi)\right]$$

$$= 2r \cos\phi \cdot \sin\theta$$

As a result, each color component is obtained in the form of having the B-Y or R-Y signal multiplied by a given scalar quantity 2 cos $\phi$. The hue becomes unvarying. This arrangement gives perfect B-Y and R-Y color-difference signals although they include some DC offset.

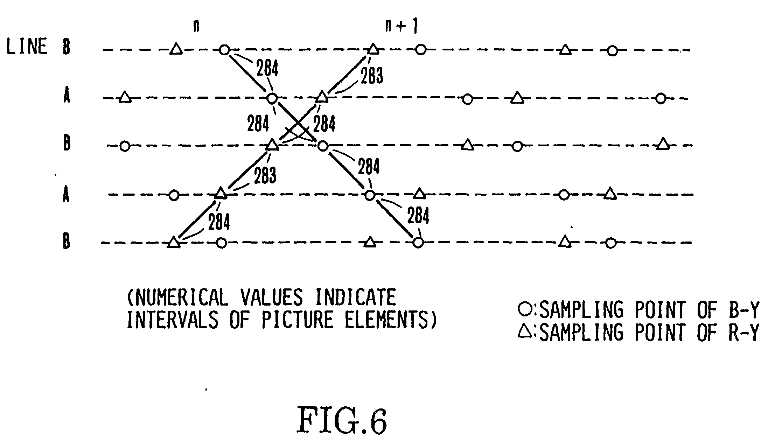

In the embodiment shown in Fig. 5, the inter-line adding operation on the artificial R-Y component is carried out by switching a signal obtained by delaying the input signal to a degree corresponding to 283 samples over to a signal obtained by delaying the input signal to a degree corresponding to 284 samples and vice versa by means of the line memory 44, the delay circuit 47, the selection circuit 48 and the full adder 46. The reason for this: In the case of the color-difference signals conforming to the PAL system, the phase of the B-Y color-difference signal varies 90 degrees between lines. Then, the phase of the R-Y color-difference signal varies between +90 degrees and -90 degrees relative to that of the B-Y signal on alternate lines. In view of this, the embodiment is arranged to perform a thinning-out process on each color-difference signal that only has different polarities within one and the same carrier wave period. The relation of the sampling points at which the B-Y and R-Y signals are sampled to the lines is as shown in Fig. 6.

Referring to Fig. 6, with respect to the B-Y signal, picture element values delayed by 284 samples are inphase signals located closest on the picture. In the case of the R-Y signal, inphase signals located closest alternate between picture element values delayed by 283 samples and picture element values delayed 284 samples on alternate lines. The embodiment is thus arranged to have the delayed R-Y signal alternate between a signal delayed by 283 samples from the input signal and a signal delayed 284 samples on every other line in adding the delayed signal. Compared with the embodiment shown in Fig. 2, this embodiment further enhances the accuracy of demodulation of the color-difference signals by virtue of this arrangement.

The outputs of the full adders 45 and 46 are supplied to the digital signal processing circuit (DSP) 100. The DSP 100 performs a predetermined digital signal processing action with a field memory, including image enlarging and composing processes, a noise reducing process, etc.. The digital signal processing action is performed in a known manner and, therefore, its details are omitted from description. As a result of these processes, color-difference signals of two different kinds are output from the digital signal processing circuit 100.

The digital color-difference signal output from the circuit 100 is modulated into a carrier chrominance signal in the same manner as in the case of the embodiment shown in Fig. 2 and described in the foregoing.

In accordance with this invention, color-difference signals having a constant hue are obtainable by the inter-line adding operation on the demodulated artificial color-difference signal components. The demodulated color-difference signal components become accurate B-Y and R-Y color-difference signals. Therefore, a color signal processing operation can be carried out without strictly adjusting the phase of the A/D converting clock signal to that of the carrier chrominance signal. Further, the invention prevents modulation distortions due to the individual deviations of constants of analog circuit elements, variations in the power supply voltage, etc..

**Claims**

1. A color signal processing apparatus for processing a carrier chrominance signal conforming to the PAL system by converting the carrier chrominance signal into a base band signal, performing a predetermined processing on the base band signal and then converting the base band signal back into the carrier chrominance signal, characterised by:

(A) clock signal forming means (40) for forming a clock signal which is phase-synchronized with a reference phase of the carrier chrominance signal and has a frequency four times as high as a carrier frequency;
(B) first conversion means (10) for converting said carrier chrominance signal into a digital signal on the basis of the clock signal formed by said clock signal forming means (40) and for outputting the digital signal;
(C) latching means (12, 14, 16) for phase-synchronizing the digital signal outputted from said conversion means (10) with the clock signal outputted from said clock signal forming means (40) and for latching the digital signal at two different timing points, thereby extracting first and second digital signals;

(D) first delay means (43) for delaying the first digital signal latched by said latching means and for outputting the delayed signal;

(E) first addition means (45) for adding the first digital signal latched by said latching means (12) and the first digital signal outputted from said first delay means and for outputting the added signal;

(F) second delay means (44) for delaying the second digital signal latched by said latching means and for outputting the delayed signal;

(G) second addition means (46) for adding the second digital signal latched by said latching means (14) and the second digital signal outputted from said second delay means and for outputting the added signal;

(H) digital signal processing means (100) arranged to input the first digital signal outputted from said first addition means and the second digital signal outputted from said second addition means, to perform digital signal processing on said first digital signal and second digital signal and to output the processed signal;

(I) second conversion means (38) arranged to input said first digital signal and second digital signal outputted from said digital signal processing means, to convert said first digital signal and second digital signal into analog carrier chrominance signals on the basis of the clock signal formed by said clock signal forming means; and

(J) means (16 to 24) for forming DC offset component signals corresponding to DC offset components of the first and second digital signals latched by said latching means and for subtracting said DC offset component signals from the first and second digital signals outputted from said signal processing means.

2. An apparatus according to Claim 1, wherein said first delay means is arranged to effect a delay of the first digital signal latched by said latching means for one horizontal scanning period and to output the delayed signal.

3. An apparatus according to Claim 1 or 2, wherein said second delay means is arranged to effect a delay of the second digital signal for one horizontal scanning period and to output the delayed signal.

4. An apparatus according to claim 1, 2 or 3 wherein said means (J) is arranged to extract, from a digital signal outputted from said conversion means, a third digital signal corresponding to a part of the carrier chrominance signal corresponding to a horizontal synchronisation period, and to form the DC offset component signals by using the third digital signal in combination with the first and second digital signals outputted from said signal processing means.

5. An apparatus according to any preceding claim, wherein said second delay means is arranged to selectively effect delaying of the second digital signal latched by said latching means for a first period or a second period and to output the delayed signal.

6. An apparatus according to Claim 5, wherein said first period is one horizontal scanning period and said horizontal scanning period and said second period is a period which is longer than the one horizontal scanning period by one sample clock period.

7. An apparatus according to Claim 6, wherein said second delay means is arranged to selectively effect delaying of the second digital signal latched by said latching means for said first period or for said second period in every one horizontal scanning period and to output the delayed signal.

8. An apparatus according to any preceding claim, wherein said digital signal processing means includes a digital memory which is arranged to input the first digital signal outputted from said first addition means and the second digital signal outputted from said second addition means, to store said first digital signal and said second digital signal and to read out the first digital signal and the second digital signal and output these digital signals.

9. An apparatus according to any preceding claim, wherein said digital signal processing means includes a digital computing circuit which is arranged to input the first digital signal outputted from said first addition means and second digital signal output from said second addition means, and to digital computing processing to said first digital signal and said second digital and output the processed digital signals.

**Patentansprüche**

1. Farbsignal- Verarbeitungsgerät zur Verarbeitung eines Farbträgersignals nach dem PAL- System durch Umwandlung des Farbträgersignals in ein Basisbandsignal, Ausführung einer vorbestimmten Verarbeitung hinsichtlich des Basisbandsignals, gefolgt von der Umsetzung des Basisbandsignals zurück in das Farbträgersignal, **gekennzeichnet durch**:

(A) Taktsignal- Bildungsmittel (40) zur Bildung eines Taktsignals, das mit einer Bezugsphase des Farbträgersignals phasensynchronisiert ist und das eine vierfach so hohe Frequenz wie eine Trägerfrequenz aufweist;

(B) erste Wandlermittel (10) zur Umsetzung des Farbträgersignals in ein Digitalsignal auf der Grundlage des von den Taktsignal- Bildungsmitteln (40) zur Abgabe des Digitalsignals gebildeten Taktsignals;

(C) Zwischenspeichermittel (12, 14, 16) zur Phasensynchronisierung des von den Wandlermitteln (10) abgegebenen Taktsignals mit dem von dem TaktsignalBildungsmitteln (40) abgegebenen Taktsignal und zur Zwischenspeicherung des Digitalsignals zu zwei verschiedenen Zeitpunkten, wodurch erste und zweite Digitalsignale ausgelesen werden;

(D) erste Verzögerungsmittel (43) zur Verzögerung des ersten in den Zwischenspeichermitteln zwischengespeicherten Digitalsignals und zur Abgabe des verzögerten Signals;

(E) erste Addiermittel (45) zum Addieren des ersten in den Zwischenspeichermitteln (12) zwischengespeicherten Digitalsignals mit dem ersten von dem ersten Verzögerungsmittel abgegeben Digitalsignal und zur Abgabe des Summensignals;

(F) zweite Verzögerungsmittel (44) zur Verzögerung des zweiten, in den Zwischenspeichermitteln gespeicherten Digitalsignals und zur Abgabe des verzögerten Signals;

(G) zweite Addiermittel (46) zum Addieren des zweiten, in den Zwischenspeichermitteln (14) zwischengespeicherten Digitalsignals mit dem zweiten, von dem zweiten Verzögerungsmittel abgegeben Digitalsignal und zur Abgabe des Summensignals;

(H) Digitalsignal- Verarbeitungsmittel (100), die zur Eingabe des ersten, von den ersten Addiermitteln abgegebenen Digitalsignals und des zweiten, von den zweiten Addiermitteln abgegeben Digitalsignals eingerichtet sind, um eine Digitalsignalverarbeitung bezüglich des ersten und des zweiten Digitalsignals auszuführen und um das verarbeitete Signal auszugeben;

(I) zweite Wandlermittel (38), die zur Eingabe des ersten Digitalsignals und des zweiten von den Digitalsignalverarbeitungsmitteln abgegeben Digitalsignals eingerichtet sind, um das erste und das zweite Digtialsignal in analoge Farbträgersignale auf der Grundlage des von den Taktsignalbildungsmitteln gebildeten Taktsignals umzusetzen; und durch

(J) Mittel (16 bis 24) zur Bildung von Gleichspannungsoffset- Komponentensignalen entsprechend den Gleichstromoffsetkomponenten der ersten und zweiten, von den Zwischenspeichern zwischengespeicherten Digitalsignale und zur Subtraktion der Gleichspannungsoffset- Komponentensignale aus den ersten und zweiten, von den Signalverarbeitungsmitteln abgegebenen Digitalsignalen.

2. Gerät nach Anspruch 1, dessen erstes Verzögerungsmittel zur Bewirkung einer Verzögerung des ersten Digitalsignals eingerichtet ist, das von den Zwischenspeichern für eine Horizontalabtastperiode zwischengespeichert wurde, und zur Ausgabe des verzögerten Signals.

3. Gerät nach Anspruch 1 oder 2, dessen zweites Verzögerungsmittel zur Bewirkung einer Verzögerung des zweiten Digitalsignals um eine Horizontalabtastperiode und zur Ausgabe des verzögerten Signals eingerichtet ist.

4. Gerät nach Anspruch 1, 2 oder 3, dessen Mittel (J) eingerichtet ist zum Auslesen eines dritten Digitalsignals aus einem von den Wandlermitteln abgegebenen Digitalsignal entsprechend einem Teil des Farbträgersignals gemäß einer Horizontalsynchronisationsperiode und zur Bildung des Gleichstromoffset- Komponentensignals unter Verwendung des dritten Digitalsignals in Verbindung mit dem ersten und zweiten, von dem Signalverarbeitungsmitteln abgegebenen Digitalsignal.

5. Gerät nach einem der vorstehenden Ansprüche, dessen zweites Verzögerungsmittel zur selektiven Bewirkung der Verzögerung des von den Zwischenspeichermitteln für eine erste oder eine zweite Periode zwischengespeicherten zweiten Digitalsignals und zur Ausgabe des verzögerten Signals eingerichtet ist.

6. Gerät nach Anspruch 5, dessen erste Periode eine Horizontalabtastperiode ist und dessen Horizontalabtastperiode und dessen zweite Periode eine Periode ist, die um eine Abtasttaktperiode länger als eine Horizontalabtastperiode ist.

7. Gerät nach Anspruch 6, dessen zweites Verzögerungsmittel eingerichtet ist zur selektiven Bewirkung der Verzögerung des zweiten Digitalsignals, das von den Zwischenspeichermitteln für eine erste Periode oder für die zweite Periode in jeder 1- Zeilen- Abtastperiode zwischengespeichert wird, und zur Ausgabe des verzögerten Signals.

**8.** Gerät nach einem der vorstehenden Ansprüche, dessen Digitalsignal- Bearbeitungsmittel einen Digitalspeicher enthält, der eingerichtet ist zur Eingabe des ersten, vom ersten Addiermittel abgegebenen Digitalsignals und des zweiten, vom zweiten Addiermittel abgegebenen Digitalsignals, zur Speicherung des ersten und des zweiten Digitalsignals und zum Auslesen des ersten und des zweiten Digitalsignals und zur Ausgabe dieser Digitalsignale.

**9.** Gerät nach einem der vorstehenden Ansprüche, dessen Digitalsignal- Verarbeitungsmittel eine Digital-Verarbeitungsschaltung enthält, die eingerichtet ist zur Eingabe des ersten, von dem ersten Addiermittel abgegebenen Digitalsignals und des zweiten vom zweiten Addiermittel abgegebenen Digitalsignals, zur digitalen Rechnerverarbeitung bezüglich des ersten und des zweiten Digitalsignals und zur Ausgabe der verarbeiteten Digitalsignale.

**Revendications**

**1.** Appareil de traitement d'un signal de couleur permettant de traiter un signal de chrominance porteur, conformément au système PAL, en convertissant le signal de chrominance porteur en un signal de bande de base, en effectuant un traitement prédéterminé sur le signal de bande de base, puis en convertissant alors le signal de bande de base en retour dans le signal de chrominance porteur, caractérisé par :

(A) un moyen de formation d'un signal d'horloge (40) pour former un signal d'horloge qui soit en synchronisation de phase avec une phase de référence du signal de chrominance porteur et possède une fréquence quatre fois plus grande que la fréquence porteuse ;
(B) un premier moyen de conversion (10) pour convertir le dit signal de chrominance porteur en un signal numérique sur la base du signal d'horloge formé par le dit moyen de formation de signal d'horloge (40) et pour sortir le signal numérique ;
(C) un moyen de verrouillage (12, 14, 16) pour la synchronisation de phase du signal numérique sortant du dit moyen de conversion (10) avec le signal d'horloge sortant du dit moyen de formation du signal d'horloge (40), et pour verrouiller le signal numérique à deux instants de calage différents, permettant d'extraire de ce fait les premier et second signaux numériques ;
(D) un premier moyen de retardement (43) pour retarder le premier signal numérique verrouillé par le dit moyen de verrouillage et pour sortir le signal retardé ;
(E) un premier moyen de sommation (45) pour additionner le premier signal numérique verrouillé par le dit moyen de verrouillage (12) et le premier signal numérique sortant du dit premier moyen de retardement et pour sortir le signal sommé ;
(F) un second moyen de retardement (44) pour retarder le second signal numérique verrouillé par le dit moyen de verrouillage et pour sortir le signal retardé ;
(G) un second moyen de sommation (46) pour additionner le second signal numérique verrouillé par le dit moyen de verrouillage (14) et le second signal numérique sortant du dit second moyen de retardement et pour sortir le signal sommé ;
(H) un moyen de traitement du signal numérique (100) adapté pour introduire le premier signal numérique sortant du dit premier moyen de sommation et le second signal numérique sortant du dit second moyen de sommation, pour effectuer le traitement du signal numérique sur le dit premier signal numérique et le dit second signal numérique et pour sortir le signal traité ;
(I) un second moyen de conversion (38) adapté pour introduire les dits premier signal numérique et second signal numérique sortant du dit moyen de traitement du signal numérique, pour convertir les dits premier signal numérique et second signal numérique en signaux porteurs analogiques de chrominance sur la base du signal d'horloge formé par le dit moyen de formation de signal d'horloge ;
et
(J) des moyens (16 à 24) pour former les signaux des composantes des valeurs de dépassement DC correspondant aux composantes des valeurs de dépassement DC des premier et second signaux numériques verrouillés par le dit moyen de verrouillage et pour soustraire les dits signaux des composantes des valeurs de dépassement DC des premier et second signaux numériques sortant du dit moyen de traitement du signal.

**2.** Appareil selon la revendication 1, dans lequel le dit premier moyen de retardement est adapté pour effectuer un retard sur le premier signal numérique verrouillé par le dit moyen de verrouillage pendant une période de balayage horizontal et pour sortir le signal retardé.

**3.** Appareil selon la revendication 1 ou 2, dans lequel le dit second moyen de retardement est adapté pour effectuer un retard sur le second signal numérique verrouillé par le dit moyen de verrouillage pendant une période de balayage horizontal et pour sortir le signal retardé.

4. Appareil selon la revendication 1, 2 ou 3, dans lequel le dit moyen (J) est adapté pour extraire, à partir d'un signal numérique sortant des dits moyens de conversion, un troisième signal numérique correspondant à une partie du signal de chrominance porteur correspondant à une période de synchronisation horizontale, et pour former les signaux des composantes des valeurs de dépassement DC en utilisant le troisième signal numérique en combinaison avec les premier et second signaux numériques sortant du dit moyen de traitement du signal.

5. Appareil selon l'une quelconque des revendications précédentes, dans lequel le dit second moyen de retardement est adapté pour effectuer sélectivement un retard sur le second signal numérique verrouillé par le dit moyen de verrouillage pendant une première ou une seconde période de balayage horizontal et pour sortir le signal retardé.

6. Appareil selon la revendication 5, dans lequel la dite première période est une période de balayage horizontal et la dite période de balayage horizontal et la dit seconde période est une période qui est plus longue que la période de balayage horizontal d'une durée d'un échantillonnage d'horloge.

7. Appareil selon la revendication 6, dans lequel le dit second moyen de retardement est adapté pour effectuer sélectivement un retard sur le second signal numérique verrouillé par le dit moyen de verrouillage pendant la dite première période ou pendant la dite seconde période dans chaque période de balayage horizontal et pour sortir le signal retardé.

8. Appareil selon l'une quelconque des revendications précédentes, dans lequel le dit moyen de traitement du signal numérique comprend une mémoire numérique qui est adaptée pour introduire le premier signal numérique sortant du dit premier moyen d'addition et le second signal numérique sortant du dit second moyen d'addition, pour stocker le dit premier signal numérique et le dit second signal numérique et pour lire le premier signal numérique et le second signal numérique et pour sortir ces signaux numériques.

9. Appareil selon l'une quelconque des revendications précédentes, dans lequel le dit moyen de traitement du signal numérique comprend un circuit de calcul numérique qui est adapté pour introduire le premier signal numérique sortant du dit premier moyen d'addition et le second signal numérique sortant du dit second moyen d'addition, et pour effectuer le traitement de calcul numérique sur le dit premier signal numérique et le dit second signal numérique et pour pour sortir ces signaux numériques traités.

FIG.1

FIG.2

FIG.3A

(1) INPUT TERMINAL 50 (LINE A) BURST

(2) INPUT TERMINAL (LINE B) BURST

(3) INPUT TERMINAL 52

(4) SIGNAL 40B

(5) SIGNAL 40A (SIGNAL 42A)

(6) OUTPUT OF A/D 10

(7) SIGNAL 42B

(8) SIGNAL 42C (LINE A)

(9) SIGNAL 42C (LINE B)

(10) BUS 70

(11) BUS 72 (LINE A)

(12) BUS 72 (LINE B)

(13) BUS 74

(14) BUS 76 (LINE A)

(15) BUS 76 (LINE B)

(16) CLOCK 42J

FIG.3B

(1) CLOCK 42D

(2) CLOCK 42E

(3) CLOCK 42F (LINE A)

(4) CLOCK 42F (LINE B)

(5) CLOCK 42G

(6) CLOCK 42H (LINE A)

(7) CLOCK 42H (LINE B)

(8) OUTPUT OF LATCH CKT 30 (LINE A)

(9) OUTPUT OF LATCH CKT 30 (LINE B)

(10) CLOCK 42J

EP 0 364 225 B1

EP 0 364 225 B1

FIG.4

(1) INPUT TERMINAL 50

(2) INPUT TERMINAL 51

(3) INPUT TERMINAL 52

(4) OUTPUT OF LATCH CKT 16    $Dce_1$    $Dce_2$    $Dce_3$    $Dce_4$    $Dce_5$

FIG.5

(NUMERICAL VALUES INDICATE
INTERVALS OF PICTURE ELEMENTS)

○:SAMPLING POINT OF B-Y
△:SAMPLING POINT OF R-Y

## FIG.6

EP 0 364 225 B1